# EUROPEAN PATENT APPLICATION

(11) **EP 4 668 170 A1**
(43) Date of publication of application: **24.12.2025**
(21) Application number: 25183091.5
(22) Date of filing: 16.06.2025
(51) Int. Cl.: G06N 5/01, G06N 5/045, G06N 7/01, G06N 20/20

(54) **METHOD AND SYSTEM FOR RECURSIVE ENSEMBLE FEATURE SELECTION USING EXPLAINABLE ARTIFICIAL INTELLIGENCE**

(30) Priority: 18.06.2024 IN 202421046770
(71) Applicant: Tata Consultancy Services Limited, Mumbai, Maharashtra 400 021 (IN)
(72) Inventor: SINGHAL, Tanmaya, 411057 Pune, Maharashtra (IN); GUL, Junaid, 411057 Pune, Maharashtra (IN); JADHAV, Vishal Sudam, 411006 Pune, Maharashtra (IN); RUNKANA, Venkataramana, 411006 Pune, Maharashtra (IN)
(74) Representative: Goddar, Heinz J.

(57) **Abstract**

The embodiments of the present disclosure herein address unresolved limitations in handling feature selection, inadequacies in capturing nonlinear relationships, issues related to interpretability in Artificial Intelligence (AI) models, and a lack of adaptability to the dynamic nature of industrial environments. Embodiments herein provide a method and system for a recursive ensemble feature selection using an explainable artificial intelligence (XAI). The method begins with a thorough digital modelling process, where the careful selection of features and identification of optimal time lags take precedence. By utilizing XAI techniques, the system ensures a transparent and interpretable selection of features and time lags. This method forms a robust foundation for subsequent forecasting model development tailored to specific datasets. The infusion of XAI into the feature selection and time lag identification stages enhances the accuracy of forecasting models while providing clear insights into the factors influencing predictions.

## Description

### CROSS-REFERENCE TO RELATED APPLICATIONS AND PRIORITY

The present application claims priority to Indian application no. Indian Patent Application No. 202421046770, filed on June 18, 2024.

### TECHNICAL FIELD

The disclosure herein generally relates to the field of an explainable artificial intelligence (XAI) for feature selection, and more particularly, a method and system for a recursive ensemble feature selection using an explainable artificial intelligence (XAI).

### BACKGROUND

Feature selection is a process of selecting a segment consisting of the most significant variables from the original ones. Existing feature selection methods struggle to efficiently handle the increasing complexity and diversity of industrial data, often resulting in suboptimal feature subsets and reduced predictive performance. Additionally, conventional modeling techniques may fall short in capturing intricate patterns and nonlinear relationships present in industrial systems, limiting their ability to provide accurate prognostics and diagnostics.

Moreover, the integration of artificial intelligence in industrial settings is hindered by issues such as interpretability and transparency. Many AI models operate as black boxes, making it challenging for domain experts to understand and trust the decision-making process. This lack of interpretability can impede the acceptance and adoption of AI-driven solutions in critical industrial applications where transparency is essential. Furthermore, existing approaches might struggle to adapt to dynamic and evolving industrial environments, as they may not effectively incorporate real-time data updates or account for shifts in system behavior over time. As industries continue to evolve, there is a pressing need for more adaptive and responsive technologies that can keep pace with the changing nature of industrial systems.

### SUMMARY

Embodiments of the present disclosure present technological improvements as solutions to one or more of the above-mentioned technical problems recognized by the inventors in conventional systems. For example, in one embodiment, a method for a recursive ensemble feature selection using an explainable artificial intelligence (XAI) is provided. The processor-implemented method includes collecting, via an Input/Output (I/O) interface, a real-time data from an array of sensors, lab measurements, environmental data, and one or more predefined instruments distributed throughout a predefined operational setup, and a historical data from a predefined database. The collected data includes a plurality of features and at least one target variable of the operational setup.

Further, the processor-implemented method includes pre-processing the collected real-time and historical data to remove outliers, impute missing values and resampling. Further, the processor-implemented method includes training a plurality of machine learning models on the pre-processed collected data using a hyperparameter tuning technique for predicting the at least one target variable of the operational setup and identifying at least one trained machine learning model from the plurality of trained machine learning models using a predefined model performance metrics. Furthermore, the processor-implemented method includes calculating a contribution score for each of the plurality of features to assess an impact of each of the plurality of features on the trained machine learning models using at least one explainable features contribution technique. The at least one explainable features contribution technique includes Shapley (SHAP), Local Interpretable Model-Agnostic Explanations (LIME), and Deep Learning Important Features (DeepLIFT).

Furthermore, the processor-implemented method includes combining the calculated contribution score for each of the plurality of features for the identified at least one trained machine learning model to obtain an ensemble contribution score for each of the plurality of features using a predefined ensemble technique, ranking the plurality of features based on the obtained ensemble contribution score to determine an order of importance for each of the plurality of features, and grouping the ranked plurality of features into one or more groups based on a temporal and spatial proximity. Further, the processor-implemented method includes eliminating iteratively at least one feature of the plurality of features having the obtained ensemble contribution score less than a predefined threshold score and at least one group of the one or more groups if number of features in the at least one group having the obtained ensemble contribution score less than a predefined threshold ensemble contribution score is greater than a pre-defined group level threshold to get an updated set of features. Finally, the processor-implemented method includes retraining recursively the at least one identified machine learning model with the updated set of features from each iteration of feature elimination till an optimal feature set is obtained based on the predefined model performance metrics for predicting the at least one target variable of the operational setup.

In another embodiment, a system for a recursive ensemble feature selection using an explainable artificial intelligence (XAI) is provided. The system comprises a memory storing a plurality of instructions, one or more Input/Output (I/O) interfaces, and one or more hardware processors coupled to the memory via the one or more I/O interfaces. The one or more hardware processors are configured by the instructions to collect, via an Input/Output (I/O) interface, a real-time data from an array of sensors, lab measurements, environmental data, and one or more predefined instruments distributed throughout a predefined operational setup, and a historical data from a predefined database, wherein the collected data includes plurality of features and at least one target variable of the operational setup.

The one or more hardware processors are configured by the instructions to pre-process the collected real-time and historical data to remove outliers, impute missing values and resampling. Further, the one or more hardware processors are configured by the instructions to train a plurality of machine learning models on the pre-processed collected data using a hyperparameter tuning technique for predicting the at least one target variable of the operational setup and identify at least one trained machine learning model from the plurality of trained machine learning models using a predefined model performance metrics.

Furthermore, the one or more hardware processors are configured by the instructions to calculate a contribution score for each of the plurality of features to assess an impact of each of the plurality of features on the identified at least one trained machine learning model using at least one explainable features contribution technique. The at least one explainable features contribution technique comprise Shapley (SHAP), Local Interpretable Model-Agnostic Explanations (LIME), and Deep Learning Important Features (DeepLIFT).

Further, the one or more hardware processors are configured by the instructions to combine the calculated contribution score for each of the plurality of features for the identified at least one trained machine learning model, obtain an ensemble contribution score for each of the plurality of features using a predefined ensemble technique, and rank the plurality of features based on the obtained ensemble contribution score to determine an order of importance for each of the plurality of features. Further, the one or more hardware processors are configured by the instructions to group the ranked plurality of features into one or more groups based on a temporal and spatial proximity and eliminate at least one feature from the plurality of features to get an updated set of features. Herein, iteratively eliminating at least one feature of the plurality of features having the obtained ensemble contribution score less than a predefined threshold score and at least one group of the one or more groups if number of features in the at least one group having the obtained ensemble contribution score less than a predefined threshold ensemble contribution score is greater than a pre-defined group level threshold to get an updated set of features. Finally, the one or more hardware processors are configured by the instructions to retrain recursively the at least one identified machine learning model with the updated set of features from each iteration of feature elimination till an optimal feature set is obtained based on the predefined model performance metrics for predicting the at least one target variable of the operational setup.

In yet another aspect, there are provided one or more non-transitory machine-readable information storage mediums comprising one or more instructions, which when executed by one or more hardware processors causes a method for a recursive ensemble feature selection using an explainable artificial intelligence (XAI) is provided. The processor-implemented method includes collecting, via an Input/Output (I/O) interface, a real-time data from an array of sensors, lab measurements, environmental data, and one or more predefined instruments distributed throughout a predefined operational setup, and a historical data from a predefined database, wherein the collected data includes plurality of features and at least one target variable of the operational setup.

Further, the processor-implemented method includes pre-processing the collected real-time and historical data to remove outliers, impute missing values and resampling. Further, the processor-implemented method includes training a plurality of machine learning models on the pre-processed collected data using a hyperparameter tuning technique for predicting the at least one target variable of the operational setup and identifying at least one trained machine learning model from the plurality of trained machine learning models using a predefined model performance metrics. Furthermore, the processor-implemented method includes calculating a contribution score for each of the plurality of features to assess an impact of each of the plurality of features on the trained machine learning models using at least one explainable features contribution technique. The at least one explainable features contribution technique includes Shapley (SHAP), Local Interpretable Model-Agnostic Explanations (LIME), and Deep Learning Important Features (DeepLIFT).

Furthermore, the processor-implemented method includes combining the calculated contribution score for each of the plurality of features for the identified at least one trained machine learning model to obtain an ensemble contribution score for each of the plurality of features using a predefined ensemble technique, ranking the plurality of features based on the obtained ensemble contribution score to determine an order of importance for each of the plurality of features, and grouping the ranked plurality of features into one or more groups based on a temporal and spatial proximity. Further, the processor-implemented method includes eliminating iteratively at least one feature of the plurality of features having the obtained ensemble contribution score less than a predefined threshold score and at least one group of the one or more groups if number of features in the at least one group having the obtained ensemble contribution score less than a predefined threshold ensemble contribution score is greater than a pre-defined group level threshold to get an updated set of features. Finally, the processor-implemented method includes retraining recursively the at least one identified machine learning model with the updated set of features from each iteration of feature elimination till an optimal feature set is obtained based on the predefined model performance metrics for predicting the at least one target variable of the operational setup.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this disclosure, illustrate exemplary embodiments and, together with the description, serve to explain the disclosed principles:
FIG. 1 illustrates a block diagram of a system for a recursive ensemble feature selection using an explainable artificial intelligence (XAI), according to some embodiments of the present disclosure.
FIG. 2 is a functional block diagram illustrating the system of FIG. 1 for a recursive ensemble feature selection using an explainable artificial intelligence (XAI), according to some embodiments of the present disclosure.
FIG. 3 is a flow chart illustrating the system of FIG. 1 for a recursive ensemble feature selection using an explainable artificial intelligence (XAI), according to some embodiments of the present disclosure.
FIG. 4A and 4B is an exemplary flow diagram illustrating a processor-implemented method for a recursive ensemble feature selection using an explainable artificial intelligence (XAI), according to some embodiments of the present disclosure.
FIG. 5 is an exemplary flow chart illustrating a model retraining and retuning and then executed on the reduced feature set, according to some embodiments of the present disclosure.

### DETAILED DESCRIPTION

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

This discourse pertains broadly to the realm of machine learning and artificial intelligence (AI)-driven data analytics. More precisely, it focuses on the prognostics and diagnosis of performance within systems employed in industrial settings. This exploration delves into the intricate interplay between ensemble feature selection methodologies and the application of AI techniques to enhance the understanding and prediction of performance issues in industrial systems.

Current challenges include limitations in handling complex data, inadequacies in capturing nonlinear relationships, issues related to interpretability in AI models, and a lack of adaptability to the dynamic nature of industrial environments. Addressing these challenges is crucial for advancing the effectiveness and applicability of ensemble feature selection and artificial intelligence in industrial data analytics.

Embodiments herein provide a method and system for a recursive ensemble feature selection using an explainable artificial intelligence (XAI). The system is configured to tackle limitations of conventional feature selection methods by introducing advanced ensemble techniques, ensuring the identification of the most relevant features from complex and diverse industrial datasets. This helps in mitigating issues related to suboptimal feature subsets and, consequently, improves the overall accuracy of predictive models. Further, the system addresses the challenge of capturing intricate patterns and nonlinear relationships within industrial systems. By integrating cutting-edge artificial intelligence techniques, the system enhances the modeling capabilities, allowing for a more accurate representation of the dynamic and complex nature of industrial processes. This improvement contributes to better prognostics and diagnostics.

Recognizing the importance of interpretability in industrial applications, the disclosure focuses on developing AI models that are more transparent and interpretable. This helps bridge the gap between advanced machine learning techniques and the need for clear decision-making processes in industrial contexts, fostering trust and understanding among domain experts. Further, the disclosure aims to contribute to the optimization of industrial systems. By addressing the previously mentioned challenges, it enhances the efficiency, reliability, and overall performance of these systems. Proactive prognostics and diagnostics facilitate timely interventions, reducing downtime and operational disruptions, which are significant concerns in industrial operations.

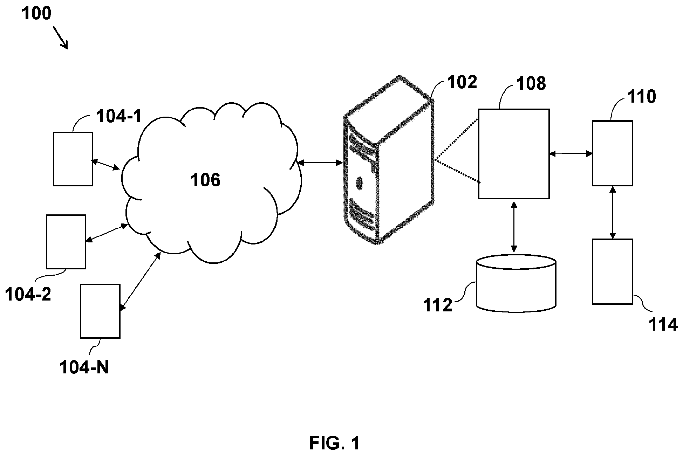

Referring now to the drawings, and more particularly to FIG. 1 through FIG. 5, where similar reference characters denote corresponding features consistently throughout the figures, there are shown preferred embodiments, and these embodiments are described in the context of the following exemplary system and/or method.

FIG. 1 illustrates a block diagram of a system 100 for a recursive ensemble feature selection using an explainable artificial intelligence (XAI), according to some embodiments of the present disclosure. Although the present disclosure is explained considering that the system 100 is implemented on a server, it may be understood that the system 100 may comprise one or more computing devices 102, such as a laptop computer, a desktop computer, a notebook, a workstation, a cloud-based computing environment and the like. It will be understood that the system 100 may be accessed through one or more input/output interfaces 104-1, 104-2... 104-N, collectively referred to as I/O interface 104. Examples of the I/O interface 104 may include, but are not limited to, a user interface, a portable computer, a personal digital assistant, a handheld device, a smartphone, a tablet computer, a workstation, and the like. The I/O interface 104 is communicatively coupled to the system 100 through a network 106.

In an embodiment, the network 106 may be a wireless or a wired network, or a combination thereof. In an example, the network 106 can be implemented as a computer network, as one of the different types of networks, such as virtual private network (VPN), intranet, local area network (LAN), wide area network (WAN), the internet, and such. The network 106 may either be a dedicated network or a shared network, which represents an association of the different types of networks that use a variety of protocols, for example, Hypertext Transfer Protocol (HTTP), Transmission Control Protocol/Internet Protocol (TCP/IP), and Wireless Application Protocol (WAP), to communicate with each other. Further, the network 106 may include a variety of network devices, including routers, bridges, servers, computing devices, storage devices. The network devices within the network 106 may interact with the system 100 through communication links.

The system 100 supports various connectivity options such as BLUETOOTH^{®}, USB, ZigBee, and other cellular services. The network environment enables connection of various components of the system 100 using any communication link including Internet, WAN, MAN, and so on. In an exemplary embodiment, the system 100 is implemented to operate as a stand-alone device. In another embodiment, the system 100 may be implemented to work as a loosely coupled device to a smart computing environment. Further, the system 100 comprises at least one memory 110 with a plurality of instructions, one or more databases 112, and one or more hardware processors 108 which are communicatively coupled with the at least one memory to execute a plurality of modules 114 therein. The components and functionalities of the system 100 are described further in detail.

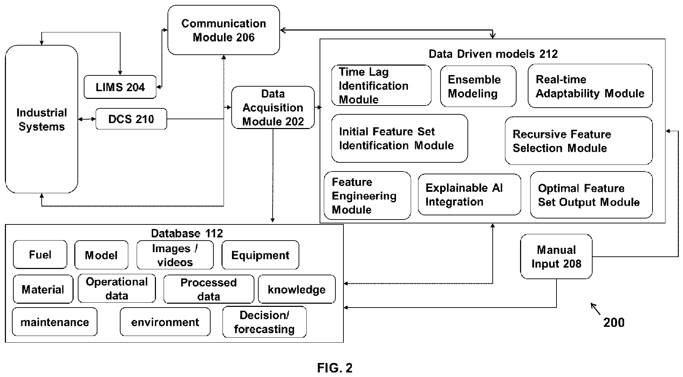

FIG. 2 is an exemplary functional block diagram 200 of the system 100 for the recursive ensemble feature selection using explainable artificial intelligence (XAI), in accordance with an embodiment of the present disclosure. The plurality of modules 114 of the system 100 comprising a data acquisition module 202, a Laboratory Information Management System (LIMS) 204, a communication module 206, a manual input module 208, a Distributed Control System (DCS) 210 and data driven module 212. It is to be noted that a data-driven modeling is an overarching concept that transcends these modules, involving the use of historical and real-time data to build predictive models. These models optimize performance, predict potential issues, and inform decision-making across diverse industrial processes. Integrated into various modules, data-driven models enhance the overall intelligence and efficiency of industrial systems.

The data acquisition module 202 of the system 100 collects real-time data from an array of sensors and instruments distributed throughout an operational setup. The data acquisition module 202 monitors essential parameters, such as temperature, pressure, and composition, laying the groundwork for operational control and optimization. Seamless integration of insights from laboratory analyses is facilitated by the Laboratory Information Management System (LIMS) 204. LIMS 204 plays a pivotal role in incorporating results from tests and analyses conducted in the laboratory, enhancing overall data accuracy, and contributing to informed decision-making. Further, the communication module 206 and servers for data exchange facilitate efficient communication. The communication module 206 and server for data exchange ensure seamless information exchange between field devices, sensors, and the central control system. Industrial communication protocols are employed for reliable data transmission, and central servers play a crucial role in managing data storage, processing, and retrieval, supporting overall operational monitoring.

The database 112 of the system 100 serves as a central repository for operational data within industrial processes. The database efficiently manages historical data, enabling trend analysis, performance evaluation, and regulatory compliance reporting. Real-time responsiveness is enhanced by data write-back mechanisms, ensuring the timely incorporation of insights gained from various sources. This mechanism facilitates the communication of the latest information back into the operational framework, contributing to responsive decision-making.

The manual input module 208 of the system 100 provides operators with a user interface to make direct inputs and adjustments to the control system. The manual input module 208 allows for hands-on interventions based on operator expertise. A Distributed Control System (DCS) 210 is present at the core of an industrial system. The DCS 210 regulates and coordinates the operation of various subsystems within industrial processes, utilizing advanced control strategies to optimize efficiency, safety, and responsiveness to dynamic changes in the production environment.

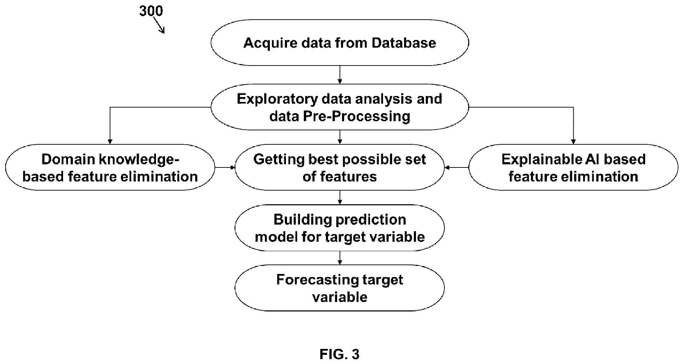

FIG. 3 is a flow diagram 300 to illustrate the recursive ensemble feature selection using the explainable artificial intelligence (XAI) implemented by the system 100 of FIG. 1, according to some embodiments of the present disclosure. Functions of the components of the system 100 are now explained through steps of flow diagram in FIG. 3. Initially, the system 100 retrieves pertinent data from a database, ensuring the inclusion of relevant information for the analysis. Further, the system 100 conducts a thorough exploratory data analysis to gain insights into the data's distribution, patterns, and outliers. The system 100 implements a comprehensive data pre-processing to address challenges such as missing values, outliers, and inconsistencies. Further, the system identifies a set of features using an explainable AI based feature selection. Finally, a robust prediction model is developed using the refined dataset and selected features. The robust prediction model employs a variety of machine learning techniques, including regression, classification, or clustering, depending on the nature of the prediction task. The robust prediction model conducts a rigorous model evaluation and fine-tuning to optimize predictive performance and ensure the model's suitability for the intended application. The recursive elimination is halted at an iteration if the model performance metric (such as accuracy, mean squared error, or mean absolute error) does not improve by a predefined minimum improvement threshold over a predetermined number of successive iterations (pre-defined patience).

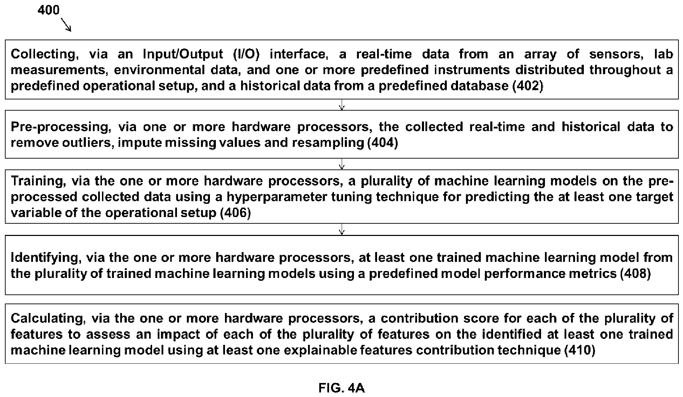

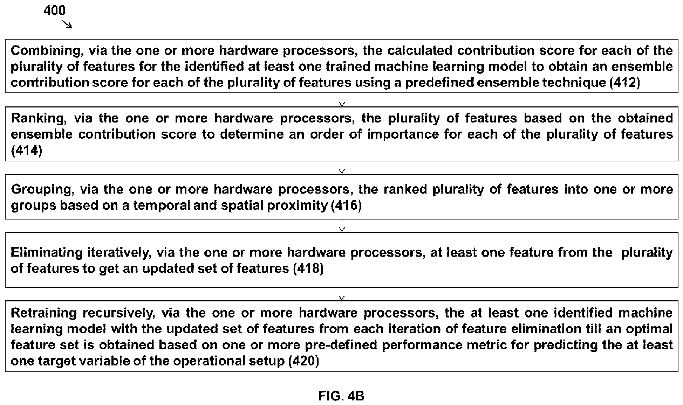

FIG. 4A and 4B (collectively referred as FIG. 4) is a flow diagram illustrating a processor-implemented method 400 for a recursive ensemble feature selection using an explainable artificial intelligence (XAI) implemented by the system 100 of FIG. 1, in accordance with an embodiment of the present disclosure.

Initially, at step 402 of the processor-implemented method 400, the one or more hardware processors 108 are configured by the programmed instructions to collect a real-time data from an array of sensors, lab measurements, environmental data, and one or more predefined instruments distributed throughout a predefined operational setup, and a historical data from a predefined database. The collected data includes a plurality of features and at least one target variable of the operational setup.

At the next step 404 of the processor-implemented method 400, the one or more hardware processors 108 are configured by the programmed instructions to pre-process the collected real-time and historical data to remove outliers, impute missing values and resampling. Before proceeding with model evaluation, the pre-processed dataset is split into training and testing sets. This ensures that the model is trained on a sufficiently large portion of the data while retaining a separate portion for evaluating its performance.

At the next step 406 of the processor-implemented method 400, the one or more hardware processors 108 are configured by the programmed instructions to train a plurality of machine learning models on the pre-processed collected data using a hyperparameter tuning technique for predicting the at least one target variable of the operational setup. A plurality of hyperparameter tuning techniques include a Grid search, a randomized search, and a Bayesian grid search that are well known in the art.

At least one primary modeling technique employed in the disclosure is XGBoost (Extreme Gradient Boosting), and an efficient gradient boosting framework widely used for supervised learning tasks. The hyperparameter tuning for the XGBoost is conducted using a Bayesian optimization, a technique known for its effectiveness in optimizing complex black-box functions with fewer evaluations compared to traditional grid or random search methods. The XGBoost hyperparameters optimized using Bayesian optimization for the model are as follows:
I. **n_estimators:** This hyperparameter represents the number of boosting rounds or trees in the XGBoost model. Increasing this parameter may lead to higher model complexity and potentially better performance on the training data. However, it also increases the risk of overfitting, where the model learns to memorize the training data instead of capturing underlying patterns. Conversely, setting it too low may result in underfitting, where the model fails to capture enough information from the data. The default value is 100.
II. **learning_rate:** The learning rate hyperparameter controls the step size at each iteration during gradient boosting. A lower learning rate allows for smoother updates to the model weights, potentially aiding convergence, and generalization. However, a higher learning rate may accelerate the learning process but increases the risk of overshooting optimal parameter values. The default value is 0.3.
III. **max_depth:** This hyperparameter determines the maximum depth of each tree in the ensemble. Deeper trees can capture more complex interactions in the data but may also lead to overfitting, especially with small datasets. Limiting the tree depth helps prevent overfitting by restricting the complexity of individual trees. The default value is 6.
IV. **alpha and lambda:** These are regularization parameters controlling L1 (Lasso) and L2 (Ridge) regularization terms, respectively. These terms penalize large parameter values, encouraging simpler models and reducing the risk of overfitting. The default values are 0 and 1, respectively.
V. **min_child_weight:** Minimum sum of instance weights required in a child node. The default value is 1.
VI. **subsample:** Fraction of training data used for each boosting iteration. The default value is 1.
VII. **colsample_bytree:** Fraction of features randomly selected at each tree node. The default value is 1.
VIII. **gamma:** Minimum loss reduction required to split a node. The default value is 0.

The following evaluation metrics are utilized to assess the performance of the trained XGBoost model:
a) Mean Absolute Error (MAE): Measures the average absolute difference between predicted and actual values.
b) Mean Squared Error (MSE): Quantifies the average squared difference between predicted and actual values.
c) Mean Absolute Percentage Error (MAPE): Evaluates the average percentage difference between predicted and actual values.
d) Root Mean Squared Error (RMSE): Represents the square root of the average squared difference between predicted and actual values.
e) Hit Rate: Hit rate typically refers to the proportion of correct predictions made by the model within a certain threshold or tolerance level.

To ensure the reliability of the model's performance metrics, k-fold cross-validation with three folds is employed. This technique divides the dataset into three subsets, iteratively using two subsets for training and one for validation. This process is repeated three times, allowing each subset to serve as the validation set once. By optimizing these hyperparameters using Bayesian optimization, the method disclosed herein aims to find the optimal configuration for the XGBoost model that maximizes predictive performance while mitigating overfitting.

At the next step 408 of the processor-implemented method 400, the one or more hardware processors 108 are configured by the programmed instructions to identify at least one trained machine learning model from the plurality of trained machine learning models using a predefined model performance metrics.

At the next step 410 of the processor-implemented method 400, the one or more hardware processors 108 are configured by the programmed instructions to calculate a contribution score for each of the plurality of features to assess an impact of each of the plurality of features on the identified at least one trained machine learning model using at least one explainable features contribution technique. Herein, the feature contribution score is leveraged to eliminate systematically less important features during the iterative process based on evolving data patterns. The explainable features contribution technique places emphasis on providing interpretable ensemble outcomes, addressing challenges associated with understanding the combined contributions of multiple models in the feature selection process.

Beyond traditional static approaches, the method introduces an iterative refinement process that continuously adapts the feature set based on Shapley values, allowing for more nuanced adjustments in each iteration. The recursive iteration process is designed to accommodate diverse stopping criteria, providing flexibility in defining conditions for the conclusion of the feature selection process, beyond rigid thresholds or predefined benchmarks. The method optimizes the balance between model diversity and homogeneity within the ensemble, ensuring that the selection of features benefits from both diverse perspectives and cohesive model contributions. Shapley values enable a fine-grained assessment of feature impact, capturing subtle interactions and dependencies that may not be apparent in more conventional feature selection methods.

At the next step 412 of the processor-implemented method 400, the one or more hardware processors 108 are configured by the programmed instructions to combine the calculated contribution score for each of the plurality of features for the identified at least one trained machine learning model to obtain an ensemble contribution score for each of the plurality of features using a predefined ensemble technique. The one or more predefined ensemble techniques include a weighted average, a log rank average, and a simple means of contribution score. The incorporates measures to ensure consistency across multiple models within the ensemble, reducing the impact of model-specific characteristics and promoting a more balanced and reliable feature selection.

Further, the plurality of features is grouped together based on domain understanding, spatial and temporal proximity, and operating heuristics. Each feature group has some group level threshold. If the features to be eliminated from a group exceed the group level threshold, the whole group is eliminated. This is done to ensure elimination is consistent with physics of the system.

At the next step 414 of the processor-implemented method 400, the one or more hardware processors 108 are configured by the programmed instructions to rank the plurality of features based on the obtained ensemble contribution score to determine an order of importance for each of the plurality of features.

At the step 416 of the processor-implemented method 400, the one or more hardware processors 108 are configured by the programmed instructions to group the ranked plurality of features into one or more groups based on a temporal and spatial proximity.

At the step 418 of the processor-implemented method 400, the one or more hardware processors 108 are configured by the programmed instructions to eliminate iteratively at least one feature of the plurality of features having the obtained ensemble contribution score less than a predefined threshold score and at least one group of the one or more groups if number of features in the at least one group having the obtained ensemble contribution score less than a predefined threshold ensemble contribution score is greater than a pre-defined group level threshold to get an updated set of features.

Finally, at the last step 420 of the processor-implemented method 400, the one or more hardware processors 108 are configured by the programmed instructions to retrain recursively the at least one identified machine learning model with the updated set of features from each iteration of feature elimination till an optimal feature set is obtained based on one or more pre-defined performance metric for predicting the at least one target variable of the operational setup.

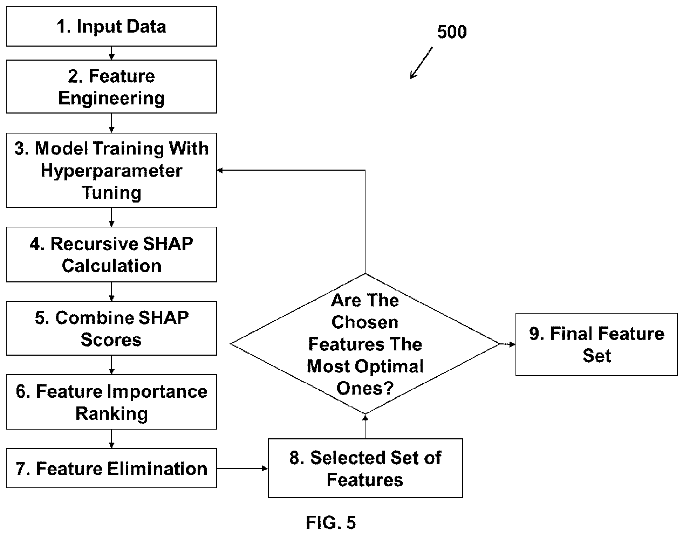

FIG. 5 is an exemplary flow chart 500 illustrating a model retraining and retuning are then executed on the obtained updated set of features, according to some embodiments of the present disclosure. Selected models undergo retraining and retuning based on the updated set of features, considering the specific technique and goals of the analysis. Through model retraining and retuning on the updated feature set, the method ensures plurality of machine learning models align with refined features, addressing limitations where feature changes may not be adequately considered in traditional methods. The recursive iteration process allows for flexible stopping criteria, such as achieving a specific number of features or reaching a desired model performance. This adaptability overcomes limitations associated with rigid stopping criteria in traditional methods.

The recursive iteration process cyclically repeats steps 2-7 of the FIG. 5 and utilizes the updated feature set from the prior iteration. This iterative approach persists until a stopping criterion is met, such as attaining a desired model performance, or as in the disclosure attaining a predetermined minimal improvement in performance. This performance improvement is called tolerance. The iteration process halts when the successive iterations are continuously below acceptable tolerance value over a pre-determined number of iterations, known as patience. This patience threshold is predefined based on domain knowledge, model complexity constraints, or computational resource considerations. Ultimately, the methodology concludes with the training of models on the selected final feature set. The performance and importance of the final model and feature set are evaluated to ensure they meet the defined criteria.

The recursive elimination is halted at an iteration if the model performance metric (such as accuracy, mean squared error, or mean absolute error) does not improve by a predefined minimum improvement threshold over a predetermined number of successive iterations (pre-defined patience). For example, if the performance metric improved from 95% to 96% over two successive iterations and the minimum improvement threshold is set at 2%, the iteration would stop as the improvement (1%) is less than the threshold. The number of successive iterations to be observed is predetermined and can vary, but it cannot exceed the total number of iterations in the process.

In one example, a Hot metal silicon content (HMSi) prediction for an efficient blast furnace operation is explained. A blast furnace is a towering, cylindrical structure used in the production of molten iron or hot metal. It operates on the principle of reducing iron ore (mainly hematite or magnetite) with carbonaceous materials such as coke, along with fluxes like limestone, in the presence of hot air blasted into the furnace. The furnace consists of several distinct zones, each playing a crucial role in the ironmaking process:
(a). **Top Section (Stock Bin):** Raw materials, including iron ore, coke, and fluxes, are loaded into the furnace through the top section. The materials descend through the furnace shaft by gravity.
(b). **Reduction Zone:** In this zone, carbon monoxide (CO) and hydrogen (H2) gases, produced by the combustion of coke with hot air, reduce the iron oxides (Fe₂O₃ or Fe₃O₄) in the iron ore to metallic iron (Fe). This reduction reaction occurs at temperatures ranging from 900°C to 1500°C.
(c). **Melting Zone:** The reduced iron, along with impurities and fluxes, melts to form molten iron or hot metal (also known as pig iron). This molten iron accumulates at the bottom of the furnace, where it is periodically tapped and cast into molds.
(d). **Slag Formation and Removal:** As the raw materials descend through the furnace, impurities in the iron ore and coke combine with fluxes to form slag. The slag floats on top of the molten iron and is periodically tapped off.

The hot metal silicon content (HMSi) prediction is crucial for efficient blast furnace operation and steelmaking processes. Silicon (Si) is a common impurity present in iron ore and coke used in blast furnace operations. Controlling the HMSi level is essential for several reasons:
(i) **Steel Quality:** Silicon content influences the mechanical properties and quality of the produced steel. Excessive silicon levels can lead to brittleness and other undesirable properties in the final steel product.
(ii) **Process Efficiency:** Optimal HMSi levels contribute to the efficient operation of downstream steelmaking processes, such as refining and casting. Controlling silicon content allows steelmakers to adjust alloy compositions and meet product specifications.
(iii) **Cost Optimization:** Accurate prediction and control of HMSi levels help minimize production costs by reducing the need for corrective measures and optimizing raw material usage.
(iv) **Environmental Impact:** Silicon content affects the efficiency of downstream processes such as desulfurization. By controlling HMSi levels, steelmakers can minimize environmental emissions and comply with regulatory standards.

Predicting the hot metal silicon content (HMSi) in blast furnace operations requires consideration of various input parameters that influence the chemical composition and characteristics of the produced hot metal. These input parameters can be broadly categorized into three main groups: raw material properties, process variables, and operational conditions. Understanding the significance of each input parameter is essential for accurate HMSi prediction.

In the given example, the method employed an Explainable AI (XAI) for the iterative process of feature selection within an ensemble modeling framework. The XAI employed for calculating feature contribution score is Shapley additive explanations (SHAP), a technique rooted in cooperative game theory, to assess the importance of features for predictive modeling, to figure out how important each feature is for making predictions. The methodology adopts a recursive feature selection strategy, systematically refining the feature set until an optimal configuration is attained. Through the incorporation of Shapley, the selection process is transparent and interpretable, enabling a clear understanding of the chosen features at each iteration.

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

The embodiments of the present disclosure herein address unresolved problem of feature selection in handling complex data, inadequacies in capturing nonlinear relationships, issues related to interpretability in AI models, and a lack of adaptability to the dynamic nature of industrial environments. Addressing these challenges is crucial for advancing the effectiveness and applicability of ensemble feature selection and artificial intelligence in industrial data analytics. Embodiments herein provide a method and system for a recursive ensemble feature selection using an explainable artificial intelligence (XAI). The method begins with a thorough digital modelling process, where the careful selection of features and identification of optimal time lags take precedence. By utilizing XAI techniques, the system ensures a transparent and interpretable selection of features and time lags. This method forms a robust foundation for subsequent forecasting model development tailored to specific datasets. The infusion of XAI into the feature selection and time lag identification stages enhances the accuracy of forecasting models while providing clear insights into the factors influencing predictions.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an application-specific integrated circuit (ASIC), a field-programmable gate array (FPGA), or a combination of hardware and software means, e.g., an ASIC and an FPGA, or at least one microprocessor and at least one memory with software processing components located therein. Thus, the means can include both hardware means, and software means. The method embodiments described herein could be implemented in hardware and software. The device may also include software means. Alternatively, the embodiments may be implemented on different hardware devices, e.g., using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computerusable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

## Claims

1. A processor-implemented method (400) comprising:
collecting (402), via an Input/Output (I/O) interface, a real-time data from an array of sensors, lab measurements, an environmental data, and one or more predefined instruments distributed throughout a predefined operational setup, and a historical data from a predefined database, wherein the collected data includes a plurality of features and at least one target variable of the operational setup;
pre-processing (404), via one or more hardware processors, the collected real-time and historical data to remove one or more outliers, impute one or more missing values and a resampling;
training (406), via the one or more hardware processors, a plurality of machine learning models on the pre-processed collected data using a hyperparameter tuning technique for predicting the at least one target variable of the operational setup;
identifying (408), via the one or more hardware processors, at least one trained machine learning model from the plurality of trained machine learning models using a predefined model performance metrics;
calculating (410), via the one or more hardware processors, a contribution score for each of the plurality of features to assess an impact of each of the plurality of features on the identified at least one trained machine learning model using at least one explainable features contribution technique;
combining (412), via the one or more hardware processors, the calculated contribution score for each of the plurality of features for the identified at least one trained machine learning model to obtain an ensemble contribution score for each of the plurality of features using a predefined ensemble technique;
ranking (414), via the one or more hardware processors, the plurality of features based on the obtained ensemble contribution score to determine an order of importance for each of the plurality of features;
grouping (416), via the one or more hardware processors, the ranked plurality of features into one or more groups based on a temporal and spatial proximity;
eliminating (418) iteratively, via the one or more hardware processors, at least one feature from the plurality of features to get an updated set of features, wherein the eliminating iteratively:
at least one feature of the plurality of features having the obtained ensemble contribution score less than a predefined threshold score; and
at least one group of the one or more groups if number of features in the at least one group having the obtained ensemble contribution score less than a predefined threshold ensemble contribution score is greater than a pre-defined group level threshold;
retraining (420) recursively, via the one or more hardware processors, the at least one identified machine learning model with the updated set of features from each iteration of feature elimination till an optimal feature set is obtained based on one or more pre-defined performance metric for predicting the at least one target variable of the operational setup.

2. The processor-implemented method (400) as claimed in claim 1, wherein a plurality of hyperparameter tuning techniques include a grid search, a randomized search, and a Bayesian grid search.

3. The processor-implemented method (400) as claimed in claim 1, wherein the at least one explainable feature contribution technique includes Shapley (SHAP), Local Interpretable Model-Agnostic Explanations (LIME), and Deep Learning Important Features (DeepLIFT).

4. The processor-implemented method (400) claimed in claim 1, wherein the one or more predefined ensemble techniques include a weighted average, a log rank average, and a simple means of contribution score.

5. The processor-implemented method (400) claimed in claim 1, wherein a recursive elimination may stop when the one or more iterations crosses a predefined patience value without changes in the one or more pre-defined performance metric above the pre-defined tolerance.

6. A system (100) comprising:
an input/output interface (104) to collect a real-time data from an array of sensors, lab measurements, an environmental data, and one or more predefined instruments distributed throughout a predefined operational setup, and a historical data from a predefined database, wherein the collected data includes a plurality of features and at least one target variable of the operational setup;
one or more hardware processors (108);
a memory (110) in communication with the one or more hardware processors (108), wherein the one or more hardware processors (108) are configured to execute programmed instructions stored in the memory (108) to:
pre-process the collected real-time and historical data to remove one or more outliers, impute one or more missing values and a resampling;
train a plurality of machine learning models on the pre-processed collected data using a hyperparameter tuning technique for predicting the at least one target variable of the operational setup;
identify at least one trained machine learning model from the plurality of trained machine learning models using a predefined model performance metrics;
calculate a contribution score for each of the plurality of features to assess an impact of each of the plurality of features on the identified at least one trained machine learning model using at least one explainable features contribution technique;
combine the calculated contribution score for each of the plurality of features for the identified at least one trained machine learning model to obtain an ensemble contribution score for each of the plurality of features using a predefined ensemble technique;
rank the plurality of features based on the obtained ensemble contribution score to determine an order of importance for each of the plurality of features;
group the ranked plurality of features into one or more groups based on a temporal and spatial proximity;
eliminate at least one feature from the plurality of features to get an updated set of features, wherein eliminating iteratively:
at least one feature of the plurality of features having the obtained ensemble contribution score less than a predefined threshold score; and
at least one group of the one or more groups if number of features in the at least one group having the obtained ensemble contribution score less than a predefined threshold ensemble contribution score is greater than a pre-defined group level threshold;
recursively retraining the at least one identified machine learning model with the updated set of features from each iteration of feature elimination till an optimal feature set is obtained based on one or more pre-defined performance metric for predicting the at least one target variable of the operational setup.

7. The system (100) as claimed in claim 6, wherein a plurality of hyperparameter tuning techniques include a Grid search, a randomized search, and a Bayesian grid search.

8. The system (100) as claimed in claim 6, wherein the at least one explainable features contribution technique includes Shapley (SHAP), Local Interpretable Model-Agnostic Explanations (LIME), and Deep Learning Important Features (DeepLIFT).

9. The system (100) as claimed in claim 6, wherein one or more predefined ensemble techniques include a weighted average, a log rank average, and a simple means of contribution score.

10. The system (100) as claimed in claim 6, wherein a recursive elimination stops when the one or more iterations crosses a pre-defined patience value without changes in one or more pre-defined performance metric above a pre-defined tolerance.

11. One or more non-transitory machine-readable information storage mediums comprising one or more instructions which when executed by one or more hardware processors cause:
collecting, via an Input/Output (I/O) interface, a real-time data from an array of sensors, lab measurements, an environmental data, and one or more predefined instruments distributed throughout a predefined operational setup, and a historical data from a predefined database, wherein the collected data includes a plurality of features and at least one target variable of the operational setup;
pre-processing the collected real-time and historical data to remove one or more outliers, impute one or more missing values and a resampling;
training, a plurality of machine learning models on the pre-processed collected data using a hyperparameter tuning technique for predicting the at least one target variable of the operational setup;
identifying at least one trained machine learning model from the plurality of trained machine learning models using a predefined model performance metrics;
calculating, a contribution score for each of the plurality of features to assess an impact of each of the plurality of features on the identified at least one trained machine learning model using at least one explainable features contribution technique;
combining, the calculated contribution score for each of the plurality of features for the identified at least one trained machine learning model to obtain an ensemble contribution score for each of the plurality of features using a predefined ensemble technique;
ranking, the plurality of features based on the obtained ensemble contribution score to determine an order of importance for each of the plurality of features;
grouping, the ranked plurality of features into one or more groups based on a temporal and spatial proximity;
eliminating iteratively, at least one feature from the plurality of features to get an updated set of features, wherein the eliminating iteratively:
at least one feature of the plurality of features having the obtained ensemble contribution score less than a predefined threshold score; and
at least one group of the one or more groups if number of features in the at least one group having the obtained ensemble contribution score less than a predefined threshold ensemble contribution score is greater than a pre-defined group level threshold;
retraining recursively, the at least one identified machine learning model with the updated set of features from each iteration of feature elimination till an optimal feature set is obtained based on one or more predefined performance metric for predicting the at least one target variable of the operational setup.

12. The one or more non-transitory machine-readable information storage mediums as claimed in claim 11, wherein a plurality of hyperparameter tuning techniques include a grid search, a randomized search, and a Bayesian grid search.

13. The one or more non-transitory machine-readable information storage mediums as claimed in claim 11, wherein the at least one explainable feature contribution technique includes Shapley (SHAP), Local Interpretable Model-Agnostic Explanations (LIME), and Deep Learning Important Features (DeepLIFT).

14. The one or more non-transitory machine-readable information storage mediums as claimed in claim 11, wherein the one or more predefined ensemble techniques include a weighted average, a log rank average, and a simple means of contribution score.

15. The one or more non-transitory machine-readable information storage mediums as claimed in claim 11, wherein a recursive elimination may stop when the one or more iterations crosses a pre-defined patience value without changes in the one or more pre-defined performance metric above the predefined tolerance.
